(19) Europäisches Patentamt

European Patent Office

Office européen des brevets

(11) Veröffentlichungsnummer: **0 279 323**
B1

# (12) EUROPÄISCHE PATENTSCHRIFT

(45) Veröffentlichungstag der Patentschrift:
31.10.90

(21) Anmeldenummer: 88101833.7

(22) Anmeldetag: 09.02.88

(51) Int. Cl.⁵: **B05C 5/00**, B29C 67/22, B29C 39/02, B29C 39/14, B29K 105/04

(54) Vorrichtung zum Auftragen eines Schaumstoff bildenden, fliessfähigen Reaktionsgemisches auf eine Unterlage.

(30) Priorität: 20.02.87 DE 3705411

(43) Veröffentlichungstag der Anmeldung:
24.08.88 Patentblatt 88/34

(45) Bekanntmachung des Hinweises auf die Patenterteilung:
31.10.90 Patentblatt 90/44

(84) Benannte Vertragsstaaten:
BE DE FR GB IT NL

(56) Entgegenhaltungen:
EP-A- 0 039 041
FR-A- 2 481 615
GB-A- 1 558 122

(73) Patentinhaber: BAYER AG,
D-5090 Leverkusen 1 Bayerwerk(DE)

(72) Erfinder: Krippl, Kurt, Niederstrasse 104,
D-4019 Monheim(DE)
Erfinder: Kreuer, Karl-Dieter, Albert-Einstein-Strasse 58,
D-5090 Leverkusen(DE)
Erfinder: Hoffmann, Erwin, Martin-Buber-Strasse 47,
D-5090 Leverkusen 3(DE)

## Beschreibung

Die Erfindung betrifft eine Vorrichtung zum Auftragen eines Schaumstoff bildenden, fließfähigen Reaktionsgemisches auf eine Unterlage, bestehend aus einem mit einem Mischer verbundenen und mit Auslaßöffnungen versehenen Auftragsrohr, welches sich quer über die Unterlage erstreckt.

Eine solche Vorrichtung ist aus der EP-A 0 039 041.

Derartige Vorrichtungen finden Anwendung bei der kontinuierlichen Herstellung von Schaumstoffbahnen auf Doppeltransportbändern und bei der kontinuierlichen Herstellung von Blockschaum auf diesbezüglichen Anlagen. Dabei wird als Unterlage ein endloses Band mit daraufgelegter Deckschicht, meist eine Papierfolie, unter dem Auftragsrohr hergeführt. Die Vorrichtung findet ebenfalls Anwendung bei der diskontinuierlichen Herstellung von Schaumstoffplatten in einem Kasten sowie bei der diskontinuierlichen Herstellung von Blockschaum in einer Kiste. Hierbei ruht die Unterlage in Form eines länglichen Kastens oder einer länglichen Kiste, während das Auftragsrohr darüber hergeführt wird. Es versteht sich, daß der Kasten bzw. die Kiste ebenfalls mit einer Folie ausgekleidet sein können.

Die Verwendung eines solchen Auftragsrohres ist auf geringe Arbeitsbreiten begrenzt, weil bei längeren Rohren sich ein so ungünstiges Strömungsprofil ausbildet, daß der im wesentlichen strömungslose Grenzschichtbereich an der Innenwandung zu den Enden des Auftragsrohres hin an Stärke zunimmt und wegen der erhöhten Verweilzeit in diesem Bereich das Reaktionsgemisch bereits vor Verlassen des Auftragsrohres ausreagiert, Anbackungen bildet und sich mit der Zeit das Auftragsrohr zusetzt. Dies führt zu einem Druckanstieg im Auftragsrohr und zur Bildung größerer Zellen, die die Wärmeleitzahl des fertigen PU-Schaumstoffes negativ beeinflussen.

Bei der Herstellung von Schaumstoffbahnen hat sich deshalb und aus dem Erfordernis eines möglichst überall gleich starken Filmes aus Reaktionsgemisch über die Arbeitsbreite eine Auftragstechnik durchgesetzt, bei welcher ein Mischkopf über die Arbeitsbreite oszilliert, wobei das Auftragrohr in wesentlich kürzerer Ausführungsform in Förderrichtung der produzierten Schaumstoffbahn ausgerichtet ist. Der entstehende zickzackförmige Auftrag muß sich noch von selbst verteilen bzw. egalisiert werden, solange das Reaktionsgemisch noch ausreichend fließfähig ist. Der Aufwand für das Oszillieren des Mischkopfes und gegebenenfalls das Egalisieren der aufgetragenen Schicht ist erheblich. Bei Arbeitsbreiten über einen Meter hinaus treten bei schnell reagierenden chemischen Systemen und/oder hohen Produktionsgeschwindigkeiten hinsichtlich einer gleichmäßig starken Filmbildung erhöhte Probleme auf.

Bei Blockschaumanlagen, wo die aufgetragene Schicht aus Reaktionsgemisch einige Zentimeter beträgt, ist die Verteilung des Reaktionsgemisches nicht ganz so problematisch, muß aber dennoch beachtet werden. Man hat für größere Arbeitsbreiten ein sich zu mehreren Ausläufen verzweigendes Auftragsrohr verwendet. Nichtsdestoweniger besteht die Gefahr, daß die verschiedenen Ströme in jenen mittleren Bereichen, in denen sie zusammenfließen, Übergangszonen im Querschnitt des entstandenen Schaumstoffblockes verursachen, welche gegenüber anderen Bereichen unterschiedliche Porengröße bzw. Dichte aufweisen.

Es besteht die Aufgabe, die eingangs genannte Vorrichtung so zu verbessern, daß sie während des Betriebes nicht durch ausreagierendes Reaktionsgemisch zuwachsen kann und daß ein gleichmäßiger Auftrag zum Erzielen eines einwandfreien Endproduktes auch bei größeren Arbeitsbreiten gewährleistet ist.

Eine weitere Aufgabe besteht darin, im Auftragsrohr Anbackungen und dessen Zuwachsen zu vermeiden sowie im reaktionsgemisch gelöstes Gas in Bläschenform zum Austritt zu bringen, damit diese beim Start der Schäumreaktion als Nukleationskeime dienen können.

Diese Aufgabe wird dadurch gelöst, daß das Auftragsrohr mit einem Vibrator verbunden ist.

Dadurch wird erreicht, daß die im Auftragsrohr an der Wandung vorhandene Grenzschicht nicht - wie bisher - strömungsarm oder gar strömungstot ist, sondern durch die Vibration dauernd bewegt wird. Auch bei längeren Verweilzeiten in dieser Grenzschicht hat das Reaktionsgemisch keine Gelegenheit mehr, Anbackungen zu bilden. Durch die dauernde Bewegung der Grenzschicht wird aber auch der Stoffaustausch quer zur Strömungsrichtung gefördert, so daß die Verweilzeit herabgesetzt wird, d.h. der Vibrationsvorgang initiiert ein günstigeres Strömungsprofil. Als überraschende und besonders vorteilhafte Nebenerscheinung hat sich gezeigt, daß im Reaktionsgemisch gelöstes Gas infolge der Vibration nahezu vollständig in Form von Bläschen austritt. Da diese Bläschen als Nukleationskeime beim Start der Schäumreaktion dienen, entsteht eine feinere Zellstruktur mit verbesserter Wärmeleitzahl. Die Vibration vermeidet bzw. verringert auch die Neigung eines aus einer Öffnung ausfließenden Strahls, sich einzuschnüren.

Vorzugsweise sind die Vibrationsfrequenz und/oder die Schwingungsamplitude des Vibrators einstellbar.

Dadurch ist es möglich, die Vibrationsfrequenz und/oder die Schwingungsamplitude den jeweiligen Erfordernissen anzupassen. Eine Anpassung kann erforderlich sein, wenn ein Reaktionsgemisch anderer Viskositöt zu verarbeiten ist oder wenn sich die Arbeitsbreite ändert. Beispielsweise kann ein Betrieb im Resonanzbereich besondere Effekte auslösen bzw. verstärken.

Gemäß einer besonderen Ausführungsform stimmt die Schwingungsrichtung des Vibrators mit der Achsrichtung des Auftragsrohres Überein.

Gemäß einer anderen Ausführungsform ist die Schwingungsrichtung senkrecht oder quer zum Auftragsrohr vorgesehen.

Besonders vorteilhaft ist es, mindestens zwei Schwingungsrichtungen sich überlagernd vorzusehen.

Schließlich kann es vorteilhaft sein, zwei Frequenzen einander zu überlagern.

Besonders geeignet ist die Überlagerung einer Frequenz im Bereich von 10 bis 500 Hz mit einer solchen im Bereich von 10 bis 100 Hz.

Die höhere Frequenz dient dabei insbesondere der Bewegung der Grenzschicht, um Anbackungen zu vermeiden, während der niedrigeren Frequenz die Aufgabe zukommt, die aus den Auslauföffnungen austretenden Strahlen aufzufächern. Es versteht sich, daß es vorteilhaft ist, wenn die Fächerbildung parallel zum Auftragsrohr erfolgt und die niedrigere Frequenz dementsprechend in Achsrichtung des Auftragsrohres angelegt wird. Stimmt man die anzulegende Frequenz auf den Abstand der Auslauföffnungen ab, so gelingt es, die Fächer so breit auszubilden, daß bereits im Moment des Auftreffens des Reaktionsgemisches auf die Unterlage ein geschlossener Vorhang gebildet ist. Da die gebildeten Fächer annähernd rautenförmigen Querschnitt aufweisen, ist es möglich, durch entsprechende Überlappung der Fächer über die Arbeitsbreite einen im wesentlichen gleichmäßig starken "Vorhang" aus Reaktionsgemisch auf die Unterlage aufzubringen.

Um die Arbeitsbreite verändern zu können, ist es vorteilhaft, das Auftragsrohr in seiner Länge veränderlich zu gestalten, sei es durch Teleskopführung oder durch austauschbare Endstücke unterschiedlicher Länge.

In einer Zeichnung ist die neue Vorrichtung in einem Ausführungsbeispiel dargestellt und näher erläutert, und zwar in Anwendung bei einem Doppeltransportband. Gezeigt ist ein Schnitt durch den Aufgabebereich des Doppeltransportbandes.

Über dem Obergurt 1 des Unterbandes 2 eines Doppeltransportbandes zum Herstellen von mit Papierdeckschichten kaschierten Schaumstoffbahnen ist quer über dem Einlaufbereich ein Auftragsrohr 3 angeordnet, welches über ein sich verzweigendes Auslaufrohr 4 mit einem Mischkopf 5 verbunden ist. An seiner tiefsten Mantellinie weist es Auslauföffnungen 6 auf. Es ist schwingbar angeordnet, indem ein Ende mit einem Vibrator 7 und das andere Ende mit einem Gegenlager 8 verbunden ist. Dem Vibrator 7 ist ein Frequenzregler 9 zugeordnet. Vibrator 7 und Gegenlager 8 sind über schwingungsisolierende Lager 10 am Rahmengestell 11 befestigt. Auf dem Obergurt 1 wird eine Papierbahn 12 mitgeführt, welche mittels Seitenleisten 13 seitlich hochgekantet bzw. abgestützt ist. Auf diese Papierbahn wird das aus den Auslauföffnungen 6 austretende Reaktionsgemisch aufgegeben. Die Führungsfrequenz ist derart auf den Abstand der Auslauföffnungen 6 abgestimmt, daß das austretende Reaktionsgemisch Fächer 14 bildet, welche einander überlappen, so daß bereits unmittelbar vor dem Auftreffen auf die Papierbahn 12 ein geschlossener Vorhang 15 vorhanden ist.

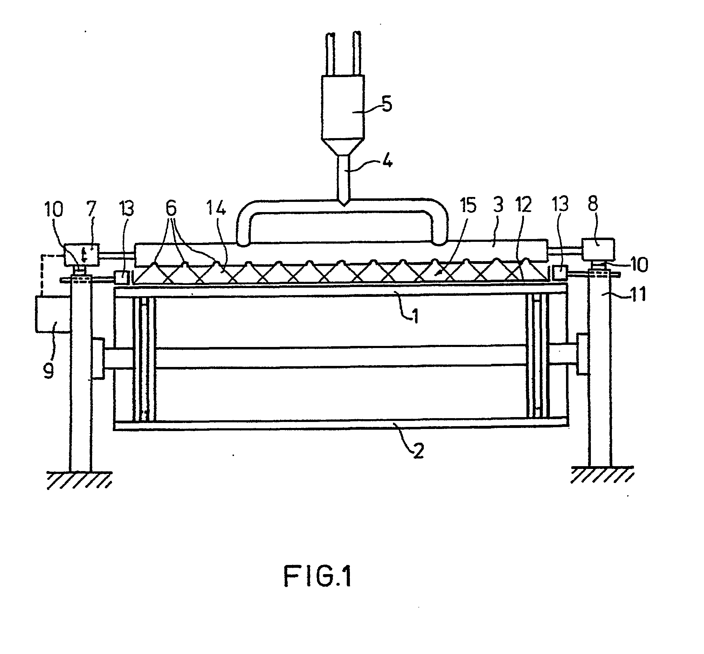

## Patentansprüche

1. Vorrichtung zum Auftragen eines Schaumstoff bildenden, fließfähigen Reaktionsgemisches auf eine Unterlage (1, 12), bestehend aus einem mit einem Mischer (5) verbundenen und mit Auslaßöffnungen (6) versehenen Auftragsrohr (3), welches sich quer über die Unterlage (1, 12) erstreckt, dadurch gekennzeichnet, daß das Auftragsrohr (3) mit einem Vibrator (7) verbunden ist.

2. Vorrichtung nach Anspruch 1, dadurch gekennzeichnet, daß die Vibrationsfrequenz des Vibrators (7) einstellbar ist.

3. Vorrichtung nach Anspruch 1 oder 2, dadurch gekennzeichnet, daß die Schwingungsamplitude des Vibrators (7) einstellbar ist.

4. Vorrichtung nach einem der Ansprüche 1 bis 3, dadurch gekennzeichnet, daß die Schwingungsrichtung des Vibrators (7) mit der Achsrichtung des Auftragsrohres (3) übereinstimmt.

5. Vorrichtung nach einem der Ansprüche 1 bis 3, dadurch gekennzeichnet, daß die Schwingungsrichtung senkrecht zum Auftragsrohr (3) vorgesehen ist.

6. Vorrichtung nach einem der Ansprüche 1 bis 3, dadurch gekennzeichnet, daß die Schwingungsrichtung quer zum Auftragsrohr (3) vorgesehen ist.

7. Vorrichtung nach einem der Ansprüche 1 bis 6, dadurch gekennzeichnet, daß mindestens zwei Schwingungsrichtungen sich überlagernd vorgesehen sind.

8. Vorrichtung nach einem der Ansprüche 1 bis 7, dadurch gekennzeichnet, daß zwei Frequenzen einander überlagert sind.

9. Vorrichtung nach Anspruch 8, dadurch gekennzeichnet, daß einer Frequenz im Bereich von 10 bis 500 Hz eine solche im Bereich von 10 bis 100 Hz überlagert ist.

## Claims

1. Apparatus for applying a foam-forming flowable reaction mixture onto a substrate (1, 12), consisting of an applicator tube (3) which is connected to a mixer (5), is provided with outlet openings (6) and extends transversely over the substrate (1, 12), characterised in that the applicator tube (3) is connected to a vibrator (7).

2. Apparatus according to claim 1, characterised in that the vibration frequency of the vibrator (7) is adjustable.

3. Apparatus according to claim 1 or 2, characterised in that the oscillation amplitude of the vibrator (7) is adjustable.

4. Apparatus according to one of claims 1 to 3, characterised in that the oscillation direction of the vibrator (7) coincides with the axial direction of the applicator tube (3).

5. Apparatus according to one of claims 1 to 3, characterised in that the oscillation direction is provided perpendicularly to the applicator tube (3).

6. Apparatus according to one of claims 1 to 3, characterised in that the oscillation direction is provided transversely to the applicator tube (3).

7. Apparatus according to one of claims 1 to 6, characterised in that at least two oscillation directions are provided in a superimposed manner.

8. Apparatus according to one of claims 1 to 7, characterised in that two frequencies are superimposed on one another.

9. Apparatus according to claim 8, characterised in that a frequency in the range of 10 to 100 Hz is superimposed on a frequency in the range of 10 to 500 Hz.

**Revendications**

1. Dispositif pour l'application d'un mélange réactionnel apte à l'écoulement, formateur de mousse, sur un substrat (1, 12), ce dispositif étant constitué d'un tube d'application (3) raccordé à un mélangeur (5) et muni d'ouvertures d'évacuation (6), le tube s'étendant transversalement par-dessus le substrat (1, 12), caractérisé en ce que le tube d'application (3) est relié à un vibreur (7).

2. Dispositif selon la revendication 1, caractérisé en ce qu'on peut régler la fréquence de vibrations du vibreur (7).

3. Dispositif selon la revendication 1, caractérisé en ce qu'on peut régler l'amplitude d'oscillation du vibreur (7).

4. Dispositif selon l'une quelconque des revendications 1 à 3, caractérisé en ce que le sens d'oscillation du vibreur (7) concorde avec la direction axiale du tube d'application (3).

5. Dispositif selon l'une quelconque des revendications 1 à 3, caractérisé en ce qu'on prévoit le sens de l'oscillation perpendiculairement au tube d'application (3).

6. Dispositif selon l'une quelconque des revendications 1 à 3, caractérisé en ce qu'on prévoit le sens de l'oscillation transversalement au tube d'application (3).

7. Dispositif selon l'une quelconque des revendications 1 à 6, caractérisé en ce qu'on prévoit au moins deux sens d'oscillation qui se superposent.

8. Dispositif selon l'une quelconque des revendications 1 à 7, caractérisé en ce que deux fréquences se superposent.

9. Dispositif selon la revendication 8, caractérisé en ce qu'une fréquence comprise dans la gamme allant de 10 à 100 Hz, se superpose à une autre fréquence comprise dans la gamme allant de 10 à 500 Hz.

FIG.1